# EUROPEAN PATENT APPLICATION

(11) **EP 1 300 077 A2**
(43) Date of publication of application: **09.04.2003**
(21) Application number: 02256855.4
(22) Date of filing: 02.10.2002
(51) Int. Cl.: A01M 23/24, A01M 23/30

(54) **Animal trap**

(30) Priority: 02.10.2001 GB 0123582
(71) Applicant: Network Pest Control Systems Limited, Warrington, Cheshire WA1 1QR (GB)
(72) Inventor: Spelman, Duncan R.D.A., Delph, Saddleworth OL3 5DF (GB)
(74) Representative: Marles, Alan David

(57) **Abstract**

There is provided a trap 10 for animals such as mice. The trap 10 has a base member 11, a jaw member 15 pivotally mounted on the base member, a trip member 14 which is pivotally mounted on the base member, a trigger 13, a spring 16 and a retainer member 12 which holds the trip member 14, jaw member 15 and trigger 13 in position relative to the base member 11.

## Description

The present invention relates to animal traps and particularly, but not exclusively, to traps for catching mice, rats and other rodents.

There are many types of mousetrap available, the conventional variety having a spring loaded bar which is rotatable about a pivot between set and sprung positions. The bar is held in its set position by a catch, but these devices can be awkward to set and can cause injury to the user. There can also be sensitivity problems related to the catch and hygiene issues relating to the removal of a trapped animal.

According to a first aspect of the present invention there is provided an animal trap comprising a base member, a jaw member which is pivotally mounted relative to the base member about a substantially horizontal axis and which has a set position and a sprung position, spring means biasing said jaw member towards said sprung position, a trip member which is pivotally mounted relative to the base member about a substantially horizontal axis and which has a set position and a tripped position, and a trigger member which is pivotally mounted relative to the base member about a substantially horizontal axis, the trigger member having a retaining lug for engaging and releasably retaining a catch surface of said jaw member in its set position and having a retaining lip for frictionally engaging and releasably retaining an engagement surface provided on said trip member such that the plane of frictional engagement between the retaining lip of the trigger and the trip member is substantially perpendicular to the base, wherein, in the set position, the spring means urges the trigger member to rotate, the rotation of the trigger member being prevented by the frictional engagement of the retaining lip and trip member, movement of the trip member from its set position towards its tripped position overcoming the frictional engagement allowing the trigger member to rotate thereby releasing the jaw member to move to its sprung position under the force of the spring means.

In preferred embodiments said plane of frictional engagement is substantially radial with respect to the pivot axis of the trigger member.

Conveniently said trip member and said trigger member are weighted towards said sprung position. A preferred feature is that said trigger member has a cam surface adapted to be engaged by said jaw member to rotate the trigger member towards its set position such that the retaining lug passes over and releasably retains said catch surface of the jaw member.

Preferably said engagement surface is provided at one end of the trip member and also a bait area is provided towards the other end of the trip member on the other side of the pivot axis of the trip member. Ideally the bait area is in the form of a recess in the trip member, but in an alternative arrangement the bait area is in the form of a recess in the base member, an access aperture being provided in the trip member.

With some embodiments the trip member is generally planar and has a downward pivot extension which sits in a pivot cradle formed in the base member and also the jaw member has a pair of spaced pivot stubs which sit in said pivot cradle on either side of the pivot extension of the trip member. In addition the trigger member has a pair of oppositely disposed stub shafts which sit in a second pivot cradle spaced from said first pivot cradle. A further preferred feature is that a retainer member is secured to the base, the retainer member retaining the trip member and trigger member in said respective pivot cradles and retaining said jaw member relative to the base. Conveniently the retainer member is releasably secured by means of a screw extending through the base member from below.

Usually said jaw member has the form of two C-shaped elements with the free ends of one C-shaped element being connected to the corresponding ends of the other C-shaped elements substantially at right angles to each other. Normally the cross bar of the first C-shaped element provides said catch surface for engaging the retaining lug of the trigger member and also the cross bar of the second C-shaped element constitutes a jaw for engaging the trip member when the trap is sprung.

According to a second aspect of the present invention there is provided an animal trap comprising a base member, a jaw member which is pivotally mounted relative to the base member about a substantially horizontal axis and which has a set position and a sprung position, spring means biasing said jaw member towards said sprung position, a trip member which is pivotally mounted relative to the base member about a substantially horizontal axis and which has a set position and a tripped position, a trigger member which is pivotally mounted relative to the base member about a substantially horizontal axis, the trigger member having a retaining lug for engaging and releasably retaining a catch surface of said jaw member in its set position and having a retaining lip for engaging and releasably retaining an engagement surface provided on said trip member and a retainer member secured to the base member, the retainer member retaining the trip member, jaw member and trigger member in position relative to the base member wherein, in the set position, the spring means urges the trigger member to rotate, the rotation of the trigger member being prevented by the engagement of the retaining lip and trip member, movement of the trip member from its set position towards its tripped position overcoming the engagement with the trigger allowing the trigger member to rotate thereby releasing the jaw member to move to its sprung position under the force of the spring means.

Preferably the trip member is generally planar and has a downward pivot extension which sits in a pivot cradle formed in the base member and also the jaw member has a pair of spaced pivot stubs which sit in said pivot cradle on either side of the pivot extension of the trip member. In addition the trigger member has a pair of oppositely disposed stub shafts which sit in a second pivot cradle spaced from said first pivot cradle. Conveniently the retainer member is releasably secured by means of a screw extending through the base member from below.

Embodiments of the present invention will now be described in more detail. The description makes reference to the accompanying drawings in which:
Figure 1 shows an exploded perspective view of the component parts of an animal trap according to the present invention,
Figure 2 is a central lengthwise section through the assembled animal trap according to the present invention in a sprung position,
Figure 3 is a perspective view of the figure 2 section,
Figure 4 is a central lengthwise section through the assembled animal trap between the sprung position and a set position,
Figure 5 is a central lengthwise section through the assembled animal trap in its set position,
Figure 6 is a perspective view of the figure 5 section,

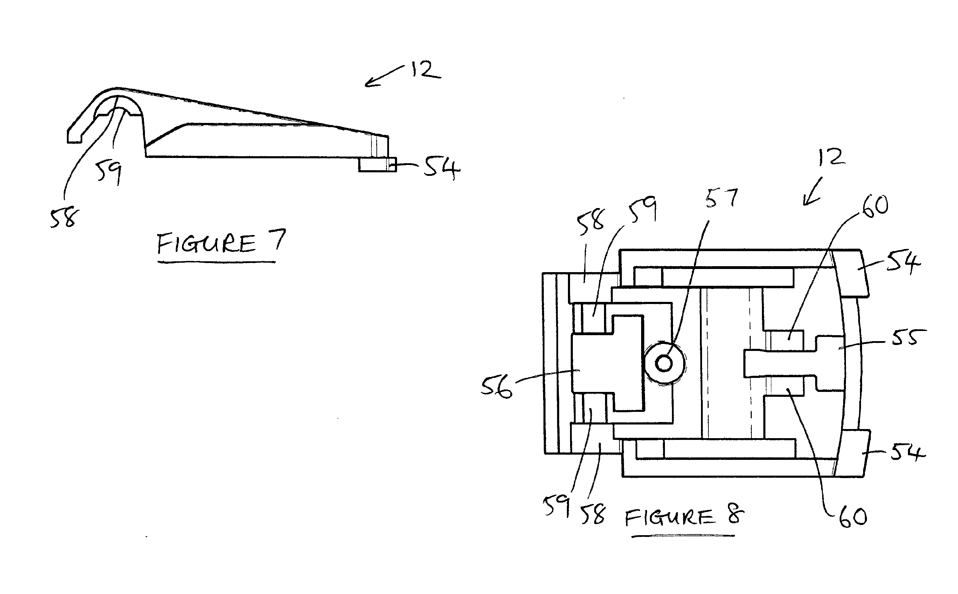

Figure 7 is a side view of a retainer component of the animal trap of the present invention, and
Figure 8 is an underplan view of the retainer of figure 7.

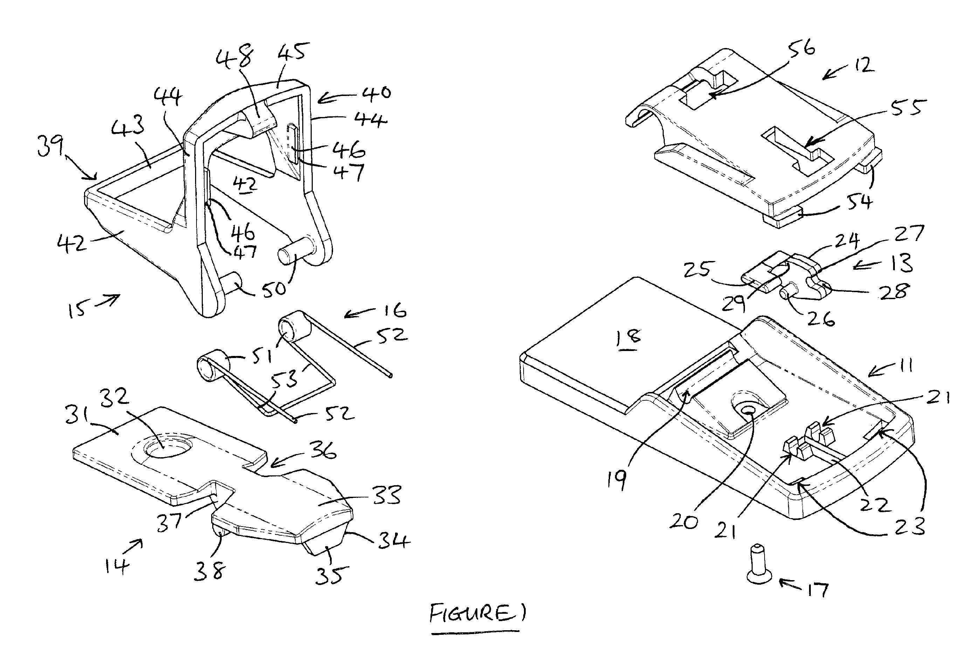

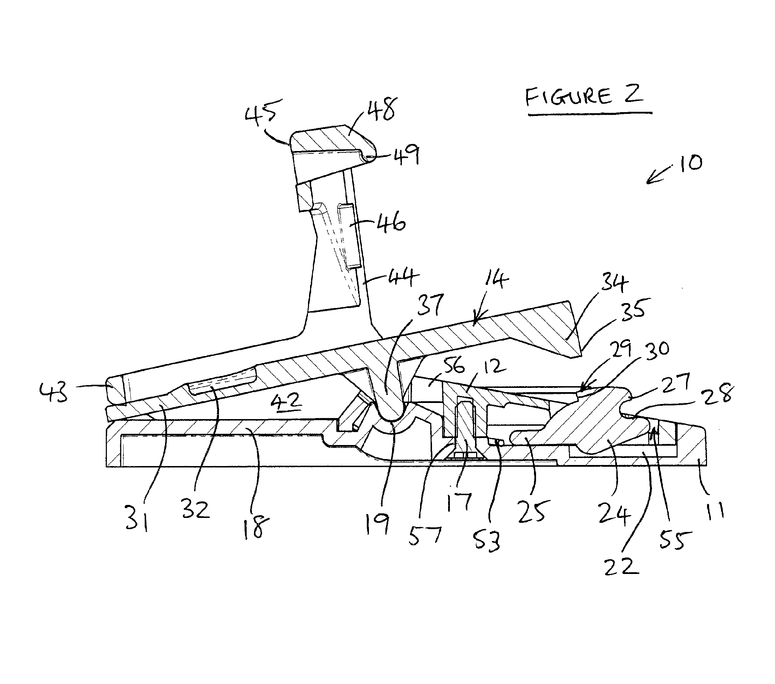

Figure 1 shows the component parts for an animal trap 10, in this embodiment a mouse trap, which is shown in section in assembled form in figures 2 to 6. The component parts are a base 11, a retainer 12, a trigger 13, a trip member 14, a jaw frame 15, a spring 16 and a fixing screw 17. In this particular embodiment all components except the spring 16 and the fixing screw 17 are injection moulded in suitably strong plastics materials although it will be appreciated that other materials could be used.

The base 11 has a first generally planar end 18 and a first pivot cradle 19 in a generally central location. There is also a hole 20 through which the fixing screw 17 passes whilst retaining the head of the screw and a second pivot cradle constituted by two spaced pivot cradle portions 21. A lengthwise extending groove 22 is provided between the pivot cradle portions 21 and a pair of spaced slots 23 are located at the other end of the base 11, opposite the planar end 18.

The trigger 13 has a main body 24 and a counterweight 25 at one end. The main body 24 provides a pair of oppositely disposed stub shafts 26 (only one visible in the figures) which are received in the respective pivot cradle portions 21 on the base 11. The trigger 13 is free to pivot in the second pivot cradle but in its rest position, the counterweight 25 causes the trigger to take up its most anti-clockwise position as shown in figure 2, with the counterweight 25 lying against the base 11.

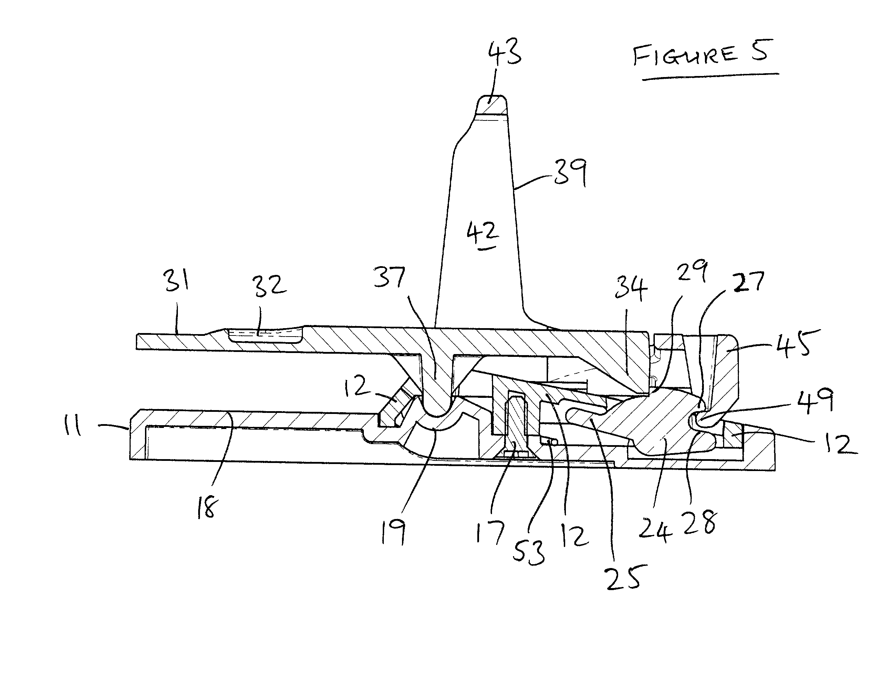

The trigger 13 also has a retaining lug 27 above a cam surface 28 and in addition a retaining lip 29. The retaining lip 29 provides a surface 30 which, in the set position of the trap 10, is generally perpendicular to the base (as shown in figure 5) and which is in a generally radial plane with respect to the pivot axis of the trigger 13. The action of these features will be discussed in due course.

The trip member 14 or paddle has a generally planar first portion 31 at one end incorporating a bait recess 32, which in this embodiment is generally circular. In use, a suitable bait is placed in the recess 32 in order to attract an unwanted animal such as a mouse or a rat. The other end 33 of the trip member 14 is also generally planar and has a downwardly extending formation 34 which provides an engagement surface 35. In use of the trap, in its set position, the engagement surface 35 frictionally engages the surface 30 of the retaining lip 29 of the trigger 13 (as shown in figure 5) but again this will be discussed later.

Between its ends the trip member 14 has a waisted portion 36 from which a pivot section 37 extends downwardly. From each side of the pivot section 37, a pivot axle 38 extends although only one of these is partially visible in figure 1. In the assembled trap 10, the pivot axles 38 sit in the first pivot cradle 19 such that the trip member 14 is free to rock in said cradle 19, although the weight distribution of the trip member is such that it rotates anti-clockwise when free to rotate. (It could, however, be designed to rotate clockwise when free to rotate).

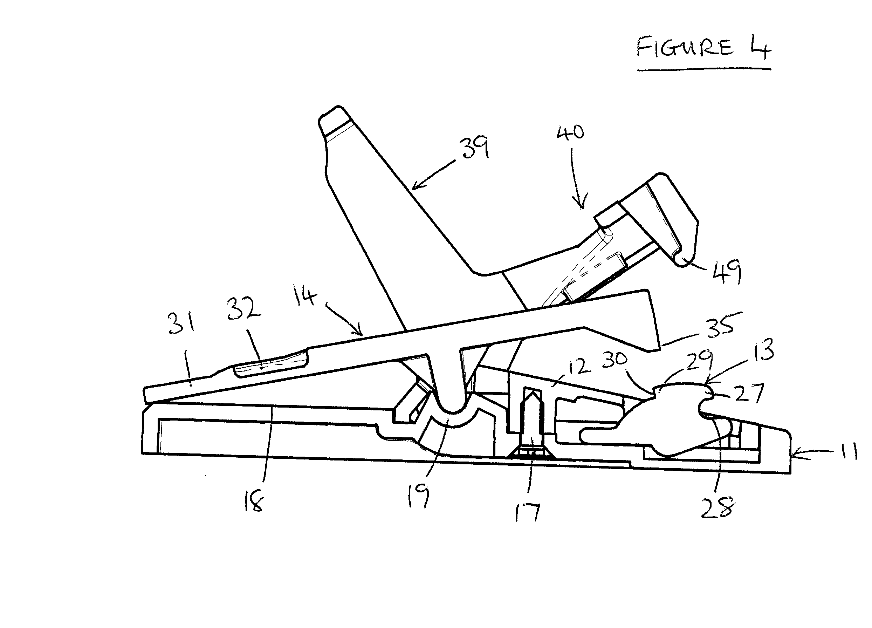

The jaw frame 15 or beam comprises first and second generally C-shaped elements 39, 40 interconnected generally at right angles to form an L-shaped member in side view (see for example figure 4). The first element 39 has a pair of legs 42 interconnected at one end by a first crossbar 43 and the second element 40 has a pair of legs 44 interconnected at one end by a second crossbar 45. The C-shaped elements 39, 40 have the free ends of their legs 42, 44 interconnected to form the jaw frame 15.

The legs 44 of the second element 40 each incorporate a guide wall 46 to define thin channels 47. The second cross-bar 45 provides an extension 48 which has an inwardly projecting catch surface 49 which in the set position of the trap engages below the retaining lug 27 of the trigger 13. At the apex of the jaw frame, where the respective legs 42, 44 meet, there are provided inwardly extending, spaced pivot stubs 50 the inner ends of which in the assembled trap sit in the first pivot cradle 19.

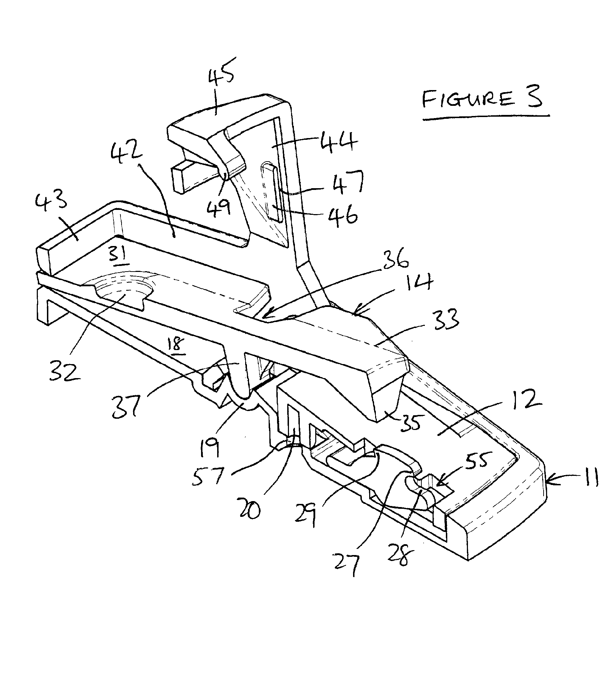

The spring 16 is conventional in that it is formed from a single wire and has two spaced coil portions 51 which sit around the pivot stubs 50 of the jaw frame, wide of the first cradle 19, with each free leg 52 engaged in one of the channels 47. The interconnected legs 53 engage the base such that the jaw frame 15 is sprung towards the position shown in figures 2 and 3.

The retainer 12 has a pair of spaced feet 54 for engagement in the slots 23 in the base 11 and has an aperture 55 which is T-shaped in plan view. The upper portion of the trigger 13 projects through the aperture 55 such that the retaining lug 27 can be engaged by the catch surface 49 of the jaw frame and the surface 29 of the retaining lip can engage the engagement surface 35 of the formation 34 at the end of the trip member 14. The enlarged end of the aperture 55 allows the extension 48 to engage the cam surface 28 of the trigger 13.

The retainer 12 has a second aperture 56 through which the pivot section 37 of the trip member 14 extends when the trap is assembled. The underside of the retainer 12, as shown in figure 8, provides suitable part-cylindrical surfaces 59 for retaining the pivot stubs 50 of the jaw frame 15 and the pivot axles 38 of the trip member 14 in the first pivot cradle 19. The underside of the retainer 12 also provides part-cylindrical surfaces 58 of greater radius which accommodate the coil portions 51 of the spring 16. The underside of the retainer also provides suitable planar surfaces 60 for retaining the stub shafts 26 of the trigger 13 in the second pivot cradle portions 21 of the base. The pivot axles 38 and the pivot stubs 50 are effectively held for independent rotation between the part-cylindrical surfaces 59 of the retainer and the part-cylindrical upper area of the first pivot cradle 19. The planar surfaces 60 simply close off the second pivot cradle portions leaving sufficient clearance to allow the stub shafts 26 of the trigger 13 to rotate therein. The underside of the retainer also provides a hole 57 for receiving the fixing screw 17 which holds all the components together.

Now that all of the components of the trap 10 have been described, as well as their positions with respect to each other, the operation of the trap 10 can now be described.

In the sprung or unset position as shown in figures 2 and 3 the jaw frame is biased anti-clockwise (in relation to the illustration views) such that the first crossbar 43 is pressing the trip member 14 against the base 11. The trigger 13, due to its counterweight 25 is lying in its most anti-clockwise position with the counterweight 25 lying against the base.

To set the trap 10, the user can grasp the second C-shaped element 40 of the jaw frame 15 and rotate it clockwise about its pivot axis and against the force of the spring 16. Without the jaw frame 15 engaging the trip member 14, the trip member 14 remains in position with its end 31 lying against the base. Figure 4 shows the jaw frame 15 between the unset and set positions.

As the downward extension 48 of the jaw frame 15 approaches the trigger 13 it engages the cam surface 28 of the trigger 13. A slight further clockwise rotation of the jaw frame 15 causes the trigger 13 to rotate clockwise slightly. The trip member 14 is then manipulated, either by hand or by tilting the trap, such that it rotates clockwise relative to the base 11 so the engagement surface 35 of the formation 34 on the end of the trip member passes the retaining lip 29 of the trigger. Simultaneously the retaining lug 27 of the trigger 13 engages above the catch surface 49 of downward extension 48 of the jaw frame 15.

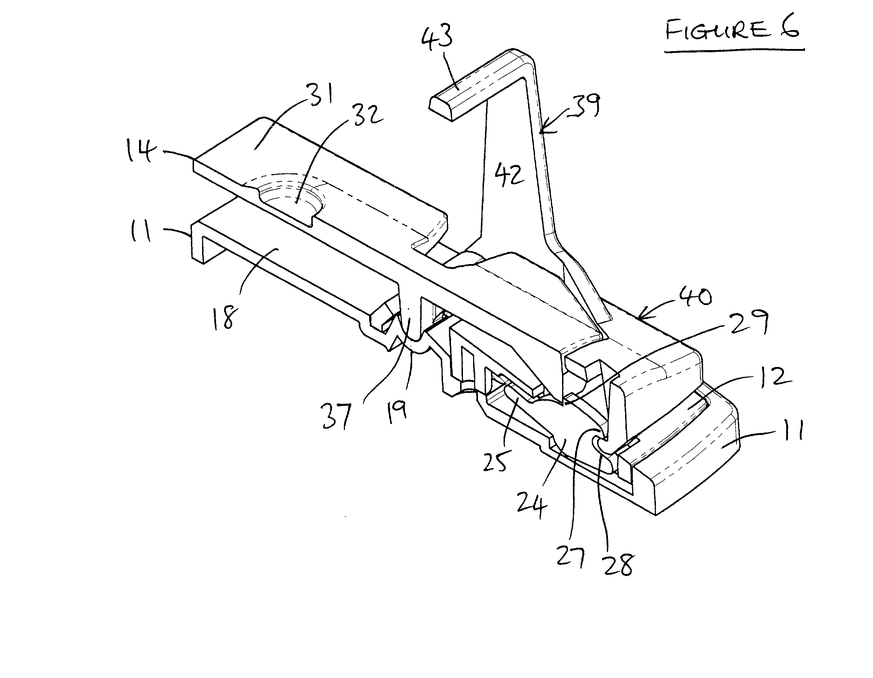

Release of the jaw frame 15 results in the set position as shown in figures 5 and 6 with the spring 16 trying to urge the jaw frame 15 anti-clockwise. This anti-clockwise rotation is prevented by the combined action of the retaining lug 27 engaging the catch surface 49 of the jaw frame 15 and of the engagement of the engagement surface 35 of the trip member 14 with the surface 30 of the retaining lip 29 of the trigger 13.

Bait is placed on the bait recess 32 either before or after the trap is set and the trap 10 is ready for use. When an animal tries to retrieve or consume the bait, a downward or anti-clockwise force will be exerted on the planar end 31 of the trip member 14. When this force is great enough to overcome the frictional engagement between the engagement surface 35 of the trip member 14 and the surface 30 of the retaining lip 29 of the trigger 13 then the trip member 14 will rotate anti-clockwise. This will free the trigger 13 to rotate anti-clockwise and release the jaw frame 15 which will rotate forcefully anti-clockwise under the force of the spring 16 until the jaw frame 15 engages the trip member with the intention of breaking the neck/back of the animal.

It will be seen from the drawings in this embodiment that the first crossbar 43 engages the top surface of the trip member 14 and the first legs 42 of the jaw frame 15 pass closely by the sides of the planar end 31 of the trip member. This assists in ensuring the animal is trapped by providing a trapping action on three sides of the trip member 14. There is also a slicing action as the first legs 42 pass the sides of the trip member 14.

It has been found that the nature and geometry of the frictional engagement of the trip member 14 relative to the trigger 13 provides improved sensitivity and reliability of activation. Also the assembly of the trap 10 utilising a single fixing screw makes the trap easy to assemble and disassemble for cleaning purposes. The predominance of plastics materials in preferred embodiments ensures that the trap is largely resistant to corrosion which could otherwise adversely affect the performance of the trap.

It will be appreciated that the actual shape and dimensions of the trap are a matter of design choice and these can be varied whilst maintaining the basic principles of construction and operation. For example the pivot cradles could be replaced with other arrangements which provide suitable pivoting action for the various components. Also the bait recess 32 could be replaced with an opening giving access to a raised recess on the base 11 such that the bait in the recess is accessible only via the opening in the trip member 14.

## Claims

1. An animal trap comprising a base member, a jaw member which is pivotally mounted relative to the base member about a substantially horizontal axis and which has a set position and a sprung position, spring means biasing said jaw member towards said sprung position, a trip member which is pivotally mounted relative to the base member about a substantially horizontal axis and which has a set position and a tripped position, and a trigger member which is pivotally mounted relative to the base member about a substantially horizontal axis, the trigger member having a retaining lug for engaging and releasably retaining a catch surface of said jaw member in its set position and having a retaining lip for frictionally engaging and releasably retaining an engagement surface provided on said trip member such that the plane of frictional engagement between the retaining lip of the trigger and the trip member is substantially perpendicular to the base, wherein, in the set position, the spring means urges the trigger member to rotate, the rotation of the trigger member being prevented by the frictional engagement of the retaining lip and trip member, movement of the trip member from its set position towards its tripped position overcoming the frictional engagement allowing the trigger member to rotate thereby releasing the jaw member to move to its sprung position under the force of the spring means.

2. An animal trap as claimed in claim 1 wherein said plane of frictional engagement is substantially radial with respect to the pivot axis of the trigger member.

3. An animal trap as claimed in claim 1 or claim 2 wherein said trip member and said trigger member are weighted towards said sprung position.

4. An animal trap as claimed in claim 3 wherein said trigger member has a cam surface adapted to be engaged by said jaw member to rotate the trigger member towards its set position such that the retaining lug passes over and releasably retains said catch surface of the jaw member.

5. An animal trap as claimed in any one of claims 1 to 4 wherein said engagement surface is provided at one end of the trip member and also a bait area is provided towards the other end of the trip member on the other side of the pivot axis of the trip member.

6. An animal trap as claimed in claim 5 wherein the bait area is in the form of a recess in the trip member.

7. An animal trap as claimed in claim 5 wherein the bait area is in the form of a recess in the base member, an access aperture being provided in the trip member.

8. An animal trap as claimed in any one of claims 1 to 7 wherein the trip member is generally planar and has a downward pivot extension which sits in a pivot cradle formed in the base member and also the jaw member has a pair of spaced pivot stubs which sit in said pivot cradle on either side of the pivot extension of the trip member.

9. An animal trap as claimed in claim 8 wherein the trigger member has a pair of oppositely disposed stub shafts which sit in a second pivot cradle spaced from said first pivot cradle.

10. An animal trap as claimed in any one of claims 1 to 9 wherein a retainer member is secured to the base, the retainer member retaining the trip member and trigger member in said respective pivot cradles and retaining said jaw member relative to the base.

11. An animal trap as claimed in claim 10 wherein the retainer member is releasably secured by means of a screw extending through the base member from below.

12. An animal trap as claimed in any one of claims 1 to 11 wherein said jaw member has the form of two C-shaped elements with the free ends of one C-shaped element being connected to the corresponding ends of the other C-shaped elements substantially at right angles to each other.

13. An animal trap as claimed in claim 12 wherein the cross bar of the first C-shaped element provides said catch surface for engaging the retaining lug of the trigger member and also the cross bar of the second C-shaped element constitutes a jaw for engaging the trip member when the trap is sprung.

14. An animal trap comprising a base member, a jaw member which is pivotally mounted relative to the base member about a substantially horizontal axis and which has a set position and a sprung position, spring means biasing said jaw member towards said sprung position, a trip member which is pivotally mounted relative to the base member about a substantially horizontal axis and which has a set position and a tripped position, a trigger member which is pivotally mounted relative to the base member about a substantially horizontal axis, the trigger member having a retaining lug for engaging and releasably retaining a catch surface of said jaw member in its set position and having a retaining lip for engaging and releasably retaining an engagement surface provided on said trip member and a retainer member secured to the base member, the retainer member retaining the trip member, jaw member and trigger member in position relative to the base member wherein, in the set position, the spring means urges the trigger member to rotate, the rotation of the trigger member being prevented by the engagement of the retaining lip and trip member, movement of the trip member from its set position towards its tripped position overcoming the engagement with the trigger allowing the trigger member to rotate thereby releasing the jaw member to move to its sprung position under the force of the spring means.

15. An animal trap as claimed in claim 14 wherein the trip member is generally planar and has a downward pivot extension which sits in a pivot cradle formed in the base member and also the jaw member has a pair of spaced pivot stubs which sit in said pivot cradle on either side of the pivot extension of the trip member.

16. An animal trap as claimed in claim 15 wherein the trigger member has a pair of oppositely disposed stub shafts which sit in a second pivot cradle spaced from said first pivot cradle.

17. An animal trap as claimed in any one of claims 14 to 16 wherein the retainer member is releasably secured by means of a screw extending through the base member from below.
